# EUROPEAN PATENT SPECIFICATION

(11) **EP 1 239 646 B1**
(45) Date of publication and mention of the grant of the patent: **07.06.2006**
(21) Application number: 02251683.5
(22) Date of filing: 08.03.2002
(51) Int. Cl.: H04L 29/06, H04N 7/24, G06F 17/30

(54) **Contents playback method and apparatus**
Verfahren und Vorrichtung zur Wiedergabe von Inhalten
Procédé et dispositif de reproduction de contenus

(30) Priority: 09.03.2001 JP 2001067318
(43) Date of publication of application: 11.09.2002
(73) Proprietor: KABUSHIKI KAISHA TOSHIBA, Tokyo 105-8001 (JP)
(72) Inventor: Noda, Reiko, Intellectual Property Division, Minato-ku, Tokyo 105-8001 (JP); Imai, Toru, Intellectual Property Division, Minato-ku, Tokyo 105-8001 (JP); Zettsu, Tatsuya Intellectual Property Division, Minato-ku, Tokyo 105-8001 (JP)
(74) Representative: Midgley, Jonathan Lee

(56) References cited:
- SATO K ET AL: "Dynamic multimedia integration with the WWW" COMMUNICATIONS, COMPUTERS AND SIGNAL PROCESSING, 1999 IEEE PACIFIC RIM CONFERENCE ON VICTORIA, BC, CANADA 22-24 AUG. 1999, PISCATAWAY, NJ, USA,IEEE, US, 22 August 1999 (1999-08-22), pages 448-451, XP010356608 ISBN: 0-7803-5582-2
- TERASHIMA Y ET AL: "Extension of SMIL with QoS control and its implementation" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 1683-1686, XP010512833 ISBN: 0-7803-6536-4
- HERNG-YOW CHEN ET AL: "Design of a Web-based synchronized multimedia lecture system for distance education" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7 June 1999 (1999-06-07), pages 887-891, XP010519508 ISBN: 0-7695-0253-9
- SALLABI F ET AL: "Adaptive resource reservation algorithm for multimedia document delivery over the Internet" ELECTRICAL AND COMPUTER ENGINEERING, 1998. IEEE CANADIAN CONFERENCE ON WATERLOO, ONT., CANADA 24-28 MAY 1998, NEW YORK, NY, USA,IEEE, US, 24 May 1998 (1998-05-24), pages 537-540, XP010285022 ISBN: 0-7803-4314-X

## Description

The present invention relates to a content playback method which plays back content of multimedia data described with SMIL (Synchronized Multimedia Integrated Language) for example, and a content playback apparatus.

HTML (Hypertext Markup Language) is known as a descriptive language for associating and displaying digitized multimedia data of picture, speech, text, etc. Furthermore, scene descriptive languages such as SMIL or BIFS used for displaying the multimedia data associated in time and space with one another are standardized with W3C and ISO/IEC.

Video and still images, speech, animation, text and text streams are all multimedia object formats processable using SMIL. Animation is a picture format displaying a continuous stream of still images. A text stream is a media format for performing character stream control and enabling text scrolling, for displaying changing character strings. As ways for transferring multimedia objects such as video, speech, still images and text over a network, download and stream processes are used.

In the download process, playback is performed after completion of transfer of multimedia information from a distribution server. In the stream process, playback is performed before completion of transfer of multimedia information from a distribution server, for example, at the time data of a predetermined buffer size is received. In the download transfer process, HTTP (Hypertext Transport Protocol) is used, whereas, for example, RTSP (Real-time Streaming Protocol) is used for the stream transfer process.

When the multimedia scene described by scene description information such as SMIL is transferred to a client terminal through a network, it takes a long time due to congestion of a network, to acquire the multimedia object to be played back by the client terminal. On account of this, it is difficult to perform playback and maintain the timing of the multimedia object based on the scene description information.

In order to avoid this problem, there is considered a method wherein all of the multimedia objects included in the scene are received beforehand, at the client terminal, before starting playback of the multimedia scene. When this method is adopted, a large delay occurs at start of playback, and the client terminal requires a large buffer region.

It is an object of the present invention to provide a content playback method and apparatus which play back content data as expected, and reduce a delay by a playback start and buffer region.

Sato K et al: "Dynamic multimedia integration with the WWW" Communications, Computers and Signal Processing, 1999 IEEE Pacific Rim Conference on Victoria, BC, Canada 22-24 Aug. 1999, Piscataway, NJ, USA, IEEE, US, 22 August 1999 (1999-08-22), pages 448-451, XP010356608 ISBN: 0-7803-5582-2 discloses a framework for seamlessly integrating continuous media with the World Wide Web. The media player starts loading the media files in the background while playing the movie.

The invention provides a playback method and apparatus as defined in Claims 1 and 4.

The invention can be more fully understood from the following detailed description when taken in conjunction with the accompanying drawings, in which:
FIG. 1 is a block diagram of a configuration of a content playback apparatus related to the first embodiment of the present invention;
FIG. 2 shows a total configuration of a content playback apparatus related to the embodiment;
FIG. 3 is a diagram for explaining a scene described by SMIL treated with the content playback apparatus related to the embodiment;
FIGS. 4A and 4B are diagrams for explaining a display position and a display time of the scene described by SMIL;
FIG. 5 is a diagram developed a SMIL file as a DOM tree;
FIG. 6 is a diagram for explaining a region table used in the content playback apparatus of the embodiment;
FIG. 7 shows an initial state of a timing tree to control a display time of a multimedia object used in the content playback apparatus of the embodiment;
FIG. 8 shows a state just after start of playback of a timing tree;
FIG. 9 shows a part of a flow chart for explaining a process procedure of a transfer scheduling device of the embodiment;
FIG. 10 shows another part of the flow chart for explaining the process procedure of the transfer scheduling section of the embodiment; and
FIG. 11 is a flow chart for explaining a process procedure of a transfer scheduling device based on the second embodiment of the present invention.

There will now be described embodiments of the present invention in conjunction with the accompanying drawings.

### (The first embodiment)

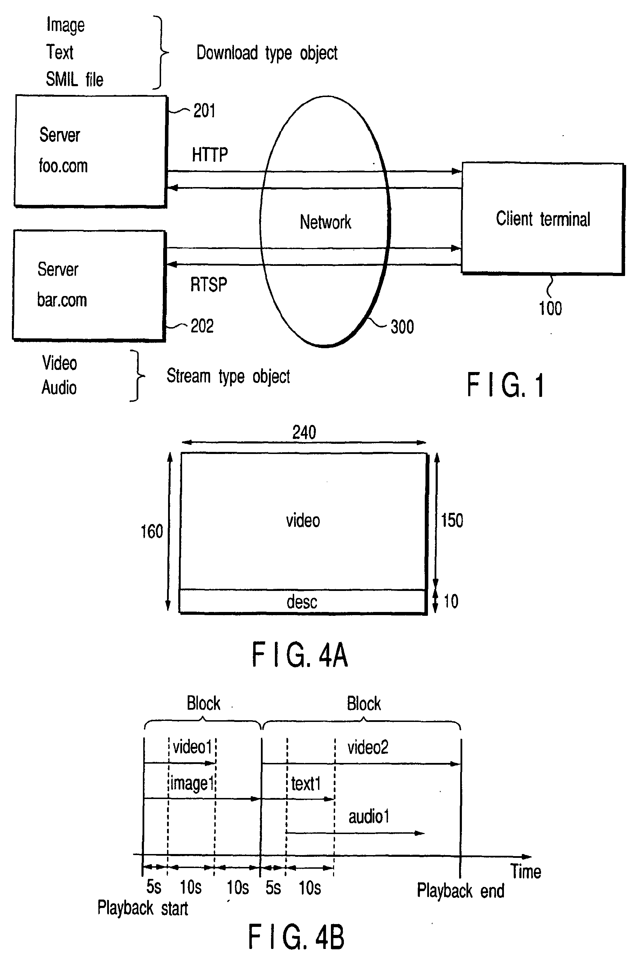

FIG. 1 shows the entire configuration of the data transfer system including a content playback apparatus of the first embodiment of the present invention. The data transfer system includes a plurality of servers 201 and 202 as the content distribution devices and a client terminal 100 as a content playback device receiving and playing back content data from the servers 201 and 202. The servers 201 and 202 are connected to the client terminal 100 by a network 300.

Content data is transferred from the servers 201 and 202 to the client terminal 100 by a download process and a stream process. The download process transfers content data to perform playback after the completion of reception of all data that a user using the client terminal 100 wants to play back. The stream process transfers content data to start the playback of the content data before the reception of all content data to be played back is completed.

It is supposed that protocols for transferring data from the server 201 or 202 to the client terminal 100 use RTSP (Real-time Streaming Protocol) in the stream process, and HTTP (Hypertext Transfer Protocol) in the download process. For example, it is supposed that the first server 201 transfers content data using HTTP for the transfer protocol, and the second server 202 transfers the content data using RTSP for the transfer protocol. Further, the second server 202 is provided with a flow control function for transferring data within a range of the bandwidth of the network 300 designated by the client terminal 100. In the embodiment shown in FIG. 1, the first server 201 and second server 202 are realized with respective computers shown by identifier foo.com and identifier bar.com, respectively. However, the servers 201 and 202 may be indicated with the same identifier.

The first server 201 saves, for example, the SMIL file corresponding to the scene description information, and saves, as the content data, a download type multimedia object included in the multimedia scene described with this SMIL file. The second server 202 saves, as the content data, a stream type multimedia object included in the multimedia scene described with the SMIL file and saved by the first server 202.

The multimedia scene represents a set of multimedia information including video, speech, and, for example, multimedia information corresponding to a program. The multimedia object represents picture, speech, and other information (content data).

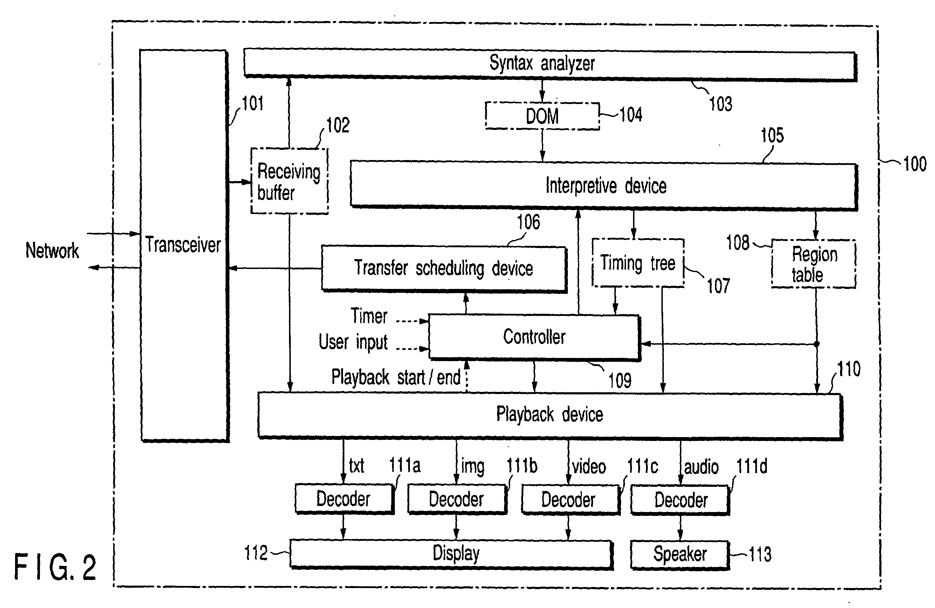

FIG. 2 shows an internal configuration of the client terminal 100 that receives the content data transferred from the servers 201 and 202 and performs display and playback of the data. The main function of the transceiver 101 is to transmit content data transfer requests to the servers 201 and 202, and to receive SMIL files, corresponding to the scene description information transferred by the servers 201 and 202, and multimedia objects included in the multimedia scene described with SMIL. Furthermore, in the present embodiment, the transceiver 101 measures both the bandwidth and available bandwidth of the network 300.

The SMIL file and multimedia object received by the transceiver 101 are stored temporarily in the receiving buffer 102. A syntax analyzer 103 reads out the SMIL file stored by the receiving buffer 102, and develops (converts) it to a DOM (Document Object Model) tree 104 corresponding to an inside expression of the file. An interpretive device 105 comprises a timing tree 107 to determine a playback start time of the multimedia by interpreting the DOM tree, and a region table 108 to determine where the contents are displayed.

The timing tree 107 generated by the interpretive device 105 is transferred to transfer scheduling device 106 via a controller 109. The transfer scheduling device 106 performs transfer scheduling of the multimedia object in the multimedia scene based on the timing tree 107 under the control of the controller 109, and requests the server 201 or 202 to transfer the multimedia object via the transceiver 101 based on this schedule.

The controller 109 receives a playback start/end command from a playback device 110 and an input event from a user, and controls the interpretative device 105 to update the timing tree 107 based on the timing at which the controller 109 receives the commands and input event. The controller 109 controls the transfer scheduling device 106 and playback device 110 based on the playback start/end command from the playback device 110, the input event from the user, the timing tree 107 and the region table 108.

The playback device 110 reads the multimedia object stored in the receiving buffer 102 under the control of the controller 109, and selects one of decoders 111a to 111d based on the kind (data type) of multimedia object. When the multimedia object is a moving image (video) encoded by MPEG or a still image (an image) encoded by JPEG, the multimedia object is decoded by the decoders 111a to 111c and displayed on the display 112. When the multimedia object is speech encoded by MP3, it is decoded by decoder 111d and is played back by loudspeaker 113.

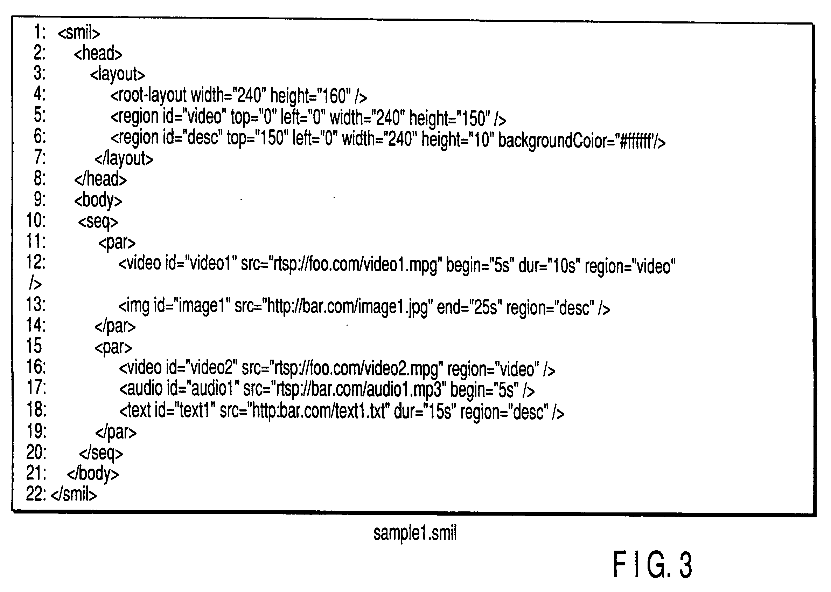

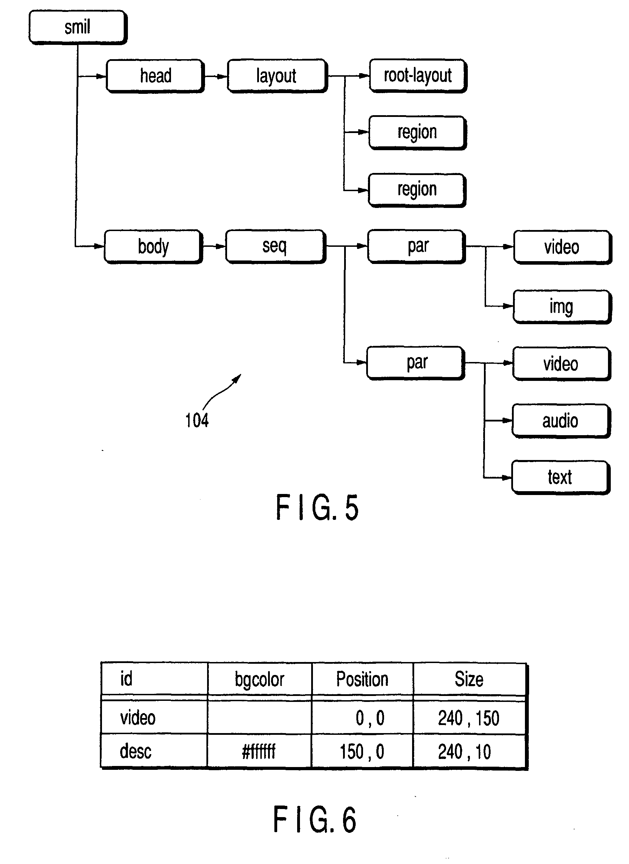

The receiving buffer 102, DOM tree 104, timing tree 107 and region table 108 may be provided in the main storage of a computer or a storage medium such as a flash memory or a hard disk. The SMIL file used as scene description information in the present embodiment will be described. FIGS. 3, 4A and 4B show a description example of the multimedia scene based on SMIL and a display example of the scene, respectively.

As shown in FIG. 3, the SMIL file starts at <smil> and ends at </smil>. Two elements <head> and <body> are provided in the <smil> element, and layout information and nature of the document are described in <head>. The designation of the media object to be displayed or behavior of time is described in the element <body>. The designation of the layout is described using an element <layout> in the element <head> as shown in 3-7 lines of FIG. 3.

The size of the scene is specified by a <root-layout> element, and display region by a <region> element. A <root-layout> element includes width and height attributes to specify the width and height of the scene. <region> includes width and height attributes to specify the width and height of the region, upper and left attributes to specify the display position from the top and left of the total display region, an id attribute to append an identifier to the display region, and a "backgroundColor" attribute to specify a background color.

The synchronizing control of each media object is performed in a <body> element. A <par> element is a description to instruct performing simultaneous playback of the media object in the element. A <seq> element is a description to instruct playback of the media object in the element sequentially from the top of the description. A group of plural media objects included in the elements <par> - </par> or a single media object element having no <par> element in the parent element is referred to as a block. The element in the block starts to be played back after the element of the previous block has been played back. After the element in the block has been played back, playback of the element of the following block is started.

The attributes of the media object include "begin" and "end" attributes specifying the timings at which the display starts and ends, a "dur" attribute to specify the display time, a region attribute to specify the region displaying the media object with an identifier of the region, and an "src" attribute to show the URL of the media object.

In the case that the "begin" attribute is specified by a time value by the media object element, when the parent element of that element is the <par> element, playback starts at a time point when the time specified from the start time of the <par> element elapsed. When the parent element is a <seq> element, the playback starts at a time point when the time specified from the finish time of the previous element passed.

In the case that the time value is specified by the "end" attribute, when the parent element of that element is the <par> element, the playback ends at a time point when the time specified from the start time of the <par> element elapsed. When the element is the <seq> element, the playback ends at a time point when the time specified from the finish time of the previous element elapsed.

When an event value is specified by the "begin" attribute or "end" attribute, the playback starts or ends in the time when the event occurred. The case that the "begin" attribute is not specified is identical to the case that the start time of a block, namely begin= "0s" is explicitly specified.

When the "end" or "dur" attribute is not specified, the original finish time of the media is adopted. For example, the elements enclosed by the <seq> elements on lines 10 to 20 of FIG. 3 are played back sequentially. In other words, the elements enclosed by the <par> elements on lines 11 to 14 of FIG. 3 are played back simultaneously. After the playback of these elements ends, the elements enclosed by the <par> elements on lines 15 to 19 are played back simultaneously.

The display screen of the scene described by "sample1.smil" on FIG. 3 is shown by FIG. 4A. The outermost rectangle of FIG. 4A is a region of the whole scene specified by root-layout. The upper rectangle of the region of the whole scene represents the region "video" shown on line 5 of FIG. 3, and the lower rectangle represents the region "desc" shown in 6th line of FIG. 3.

According to the description in the <body> element, the image object "image1.jpg" is played back for 25 seconds on the region "desc" shown in FIG. 4B, and after five seconds the video object "video1.mpg" is played back for 10 seconds on the region "video". After the playback of the image object "image1.jpg" ends, the video object "video2.mpg" and text object "text1.txt" start to be played back in the region "video" and region "desc" simultaneously. After five seconds, playback of the audio system object "audio1.mp3" is started. The text object "text1.txt" is played back for 15 seconds, and the video object "video2.mpg" and audio system object "audio1.mp3" are played back until the media itself ends.

As described heretofore, the first server 201 saves the SMIL file corresponding to a description of the scene and a download type multimedia object included in the scene described by the SMIL file, and the second server 202 saves the stream type multimedia object included in the scene described by the SMIL file.

For example, in transfer of the multimedia scene described by the SMIL file on FIG. 3, the SMIL file "sample1.smil", and the image object "image1.jpg" and text object "text1.txt" beginning with http:// that the values of the "src" attributes of lines 13 and 18 of FIG. 3 specify the transfer with the download type are saved by the first server 201. As thus described, the content data (object) that is specified to be transferred with the download type is referred to as download type data (download type object). In other words, the download type data (download type object) is the content data (object) that the playback starts after all the data to construct the object is transferred, in principle.

The second server 202 saves the video objects "video1.mpg" and "video2.mpg" and audio object "audio1.mp3" that the description of "src" indicated in lines 12, 16 and 17 of FIG. 3 begins with "rtsp://" specifying to transfer the data with the stream type. For example, the URL of the SMIL file in the server 201 is "http://foo.com/sample1.smil", and the URL showing the video object "video1.mpg" in the server 202 is "rtsp://bar.com/video1.mpg". As thus described, the content data (object) that is specified to be transferred with the stream type is referred to as stream type data (stream type object). In other words, the stream type data (stream type object) is content data (object) that the playback can start if a part of the data is transferred in principle.

There will now be described an operation of the data transfer system related to the present embodiment.

For example, a user specifies "http://foo.com/sample1.smil" which is the URL of the SMIL file "sample1.smil" shown in FIG. 3 or clicks a link for the URL of a homepage displayed by the display 112, in order to request transferring the file "sample1.smil". Then, the transceiver 101 requests the first server 201 described in the URL to transfer the file "sample1.smil". As a result, the SMIL file "sample1.smil" is transferred to the client terminal 100 from the server 201. The client terminal 100 receives the file "sample1.smil" with the transceiver 101, and stores it in the receiving buffer 102.

The SMIL file "sample1.smil" stored in the receiving buffer 102 is read by the syntax analyzer 103 and developed by the DOM tree 104. FIG.5 shows an example of the DOM tree 104. The SMIL file has always a structure to contain ending tags corresponding to beginning tags and nest these tags. The form that expresses a hierarchical structure of the tags as a tree structure constructing the tags as nodes is the DOM tree 104.

Each node of the DOM tree 104 stores the attribute value that the element expressed by each tag has. In an example of FIG. 5, route nodes are "smil" shown on lines and 22 of FIG. 3, and child nodes are "head" shown on lines 2 and 8 of FIG. 3 and "body" shown on lines 9 and 21. The child nodes of "head" are "layout" shown on lines 3 and 7 of FIG. 3 and the child nodes of "layout" are "root-layout" shown on line 4 and "region" shown on lines 5 and 6. Since the nodes "root-layout" and "region" have an attribute, the value of the attribute is stored in each node. The child node "body" analyzes a tag in turn, too and is developed in a hierarchy structure.

The DOM tree 104 is read from the interpretive device 105 to generate the region table 108. FIG. 6 shows an example of the region table 108 that is generated by the attributes of the "region" elements that are the child elements of the "layout" element of the DOM tree 104 of FIG. 5. The region table 108 comprises a group of 4 sets of, for example, id storing an identifier of the region, bgcolor storing a background color, a position storing a coordinate of the upper left corner of the region and a size storing the width and height of the region.

For example, the value of the id attribute is stored in id of FIG. 6 from the "region" element shown on line 5 of FIG. 3. The coordinate on the upper left corner of the rectangular region is stored under "position" in FIG. 6 based on the upper and left attributes, and the width and height of the rectangular region are stored under "size" of FIG. 6 based on the width and height attributes. Since the "backgroundColor" attribute is not specified, "-" is stored in the "bgcolor" of FIG. 6. The "region" element shown on line 6 is stored in the region table 108 of FIG. 6, too. The region table 108 is referred to in a display of the multimedia object, and a display position is specified based on this display.

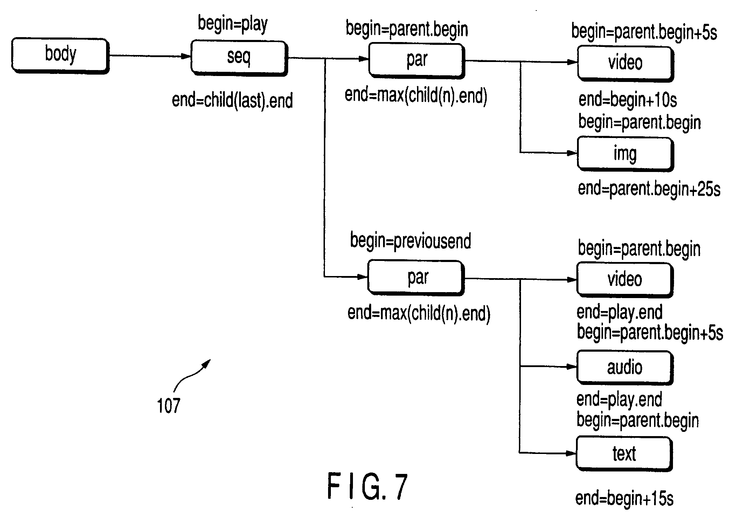

The interpretative device 105 generates the timing tree 107, too. FIG. 7 shows the timing tree 107 that is made by analyzing the "par" elements, the "seq" element and the multimedia object elements that are child elements of the "body" element of the DOM tree 104 shown in FIG. 5. Each node of the timing tree 107 stores attribute information (begin, end, dur, alt, title, longdesc, fill, region, src, type) of the multimedia object element, calculates the effective start or finish time of each element based on the attribute information and provides the result. The effective playback start time and effective playback finish time of each element are calculated with a time model described by SMIL2.0 specifications.

In the example of FIG. 7 for example, the effective start time of the beginning "seq" element is the time (play) when the playback is started, and the effective start time of the first child element "par" of the "seq" element is an effective start time (parent.begin) of the parent element "seq". This is equal to the play. Furthermore, since a time value is explicitly specified by the "begin" attribute, the effective start times of the "video" element corresponding to the child element of the "par" element and the "img" element becomes equal to the time obtained by adding the time value to the effective start time of the parent element. In other words, the effective start time of the "video" element becomes "parent.begin+5s", and the effective start time of the "img" element becomes "parent.begin".

Generally, the effective playback start time and playback finish time of a certain element are determined by the playback start time of the parent element and previous element, the playback finish time and the outbreak time of an event from a user. Therefore, the controller 109 of FIG. 1 instructs the interpretative device 105 to update the timing tree 107 upon detection of the playback start/end command and the event from the user.

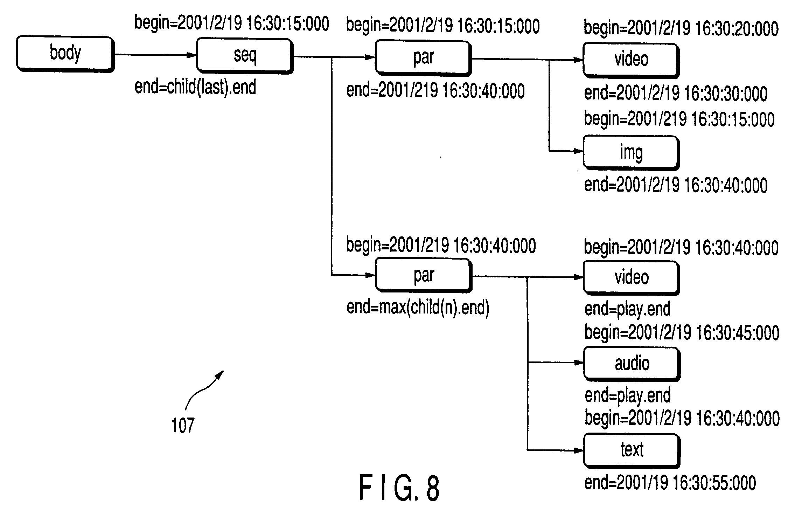

FIG. 8 shows the timing tree 107 immediately after that the playback of the scene starts by the SMIL file "sample1.smil". This timing tree 107 is updated by the time at which the playback of the scene starts. In other words, the controller 109 detects the scene playback start time and sends it to the interpretative device 105. The interpretative device 105 updates the timing tree 107 according to the time. In this example, suppose that the playback start time of the scene is 16:30:15 on February 19, 2001 (2001/2/19 16:30:15::000), at first the effective start time of the "seq" element is updated by 2001/2/19 16:30:15. As a result, since the effective start time of the "par" element of the beginning child element of the "seq" element is settled, the time is updated by 2001/2/19 16:30:15::000. Thus, the playback start time and playback finish time of the "video" element corresponding to the child element of the "par" element are settled. Accordingly, the effective start time of the "video" element corresponding to the child element of the "par" element is updated in 2001/2/19 16:30:20::000 and the effective finish time is updated in 2001/2/19 16:30:25::000, too.

Since the effective start time and effective finish time of the "img" element are settled in the same way, these times are updated in 2001/2/19 16:30:15::000 and 2001/2/19 16:30:40::000. In connection with this update, the effective finish time of the "par" element of the parent element is settled too. This time is updated in max (2001/2/19 16:30:25::000, 2001/2/19 16:30:40::000), namely 2001/2/19 16:30:40::000. The effective start time of the "par" element corresponding to the next child element of the "seq" element is settled too, this time is updated in 2001/2/19 16:30:40::000. The effective start times of the "video" element, "audio" element and "text" element which are the child element of the "par" element and the effective finish time of the "text" element are similarly settled, and these times are updated in 2001/2/19 16:30:40:000, 2001/2/19 16:30:45:000, 2001/2/19 16:30:4:0000, and 2001/2/19 16:30:55:000.

As thus described, the interpretative device 105 updates the element wherein the playback start time or playback finish time of the timing tree is settled on the basis of the time settled by an event.

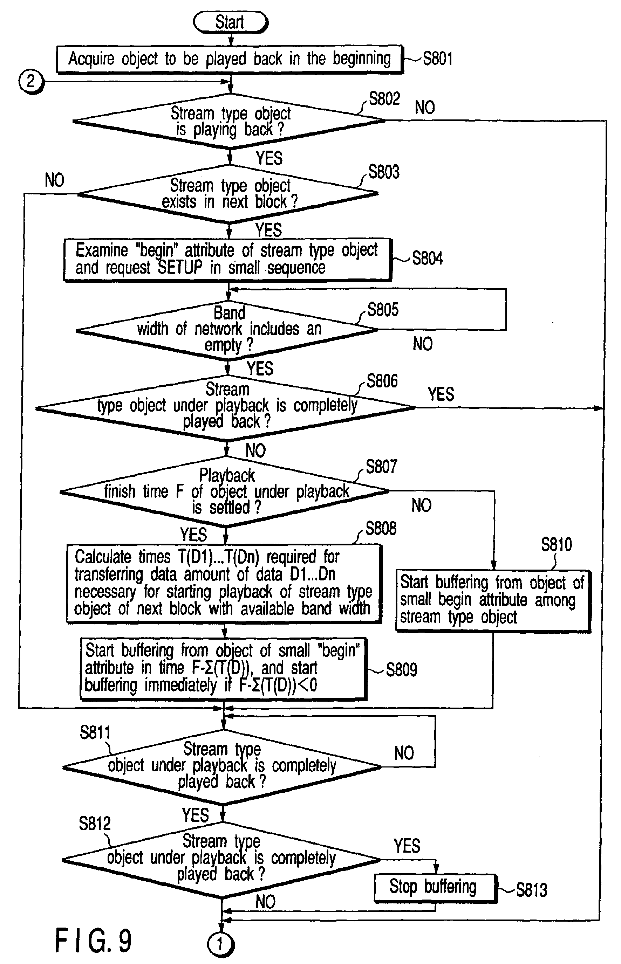

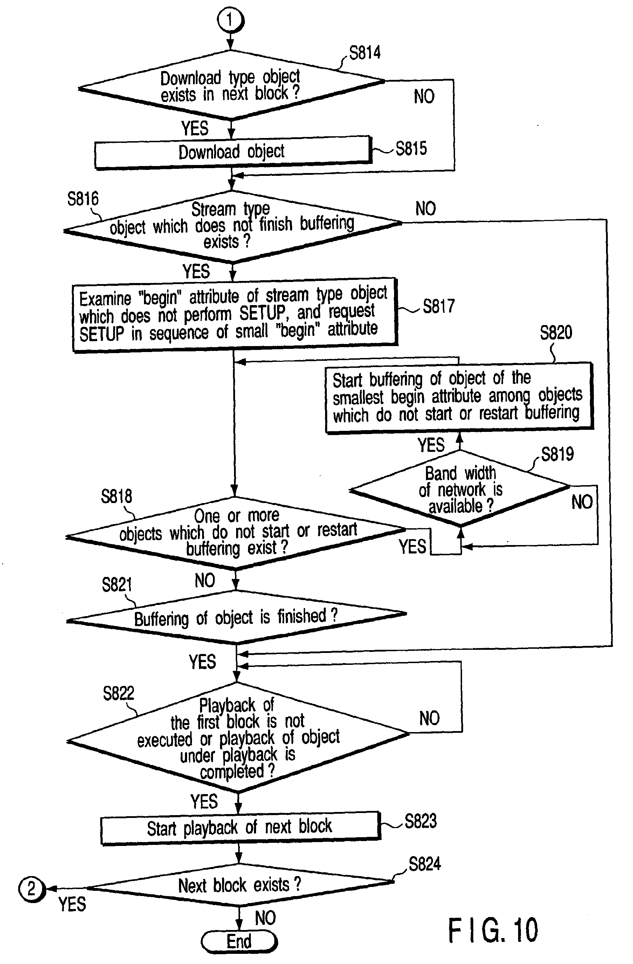

There will now be described a process procedure of the transfer scheduling device 106 to perform the transfer schedule of the object in the scene based on the playback timing of the multimedia object described in the SMIL file referring to a flow chart shown in FIGS. 9 and 10. One characteristic of the process of the transfer scheduling device 106 is to divide plural objects described by the SMIL file into a single block (a single media object having no "par" element in the parent element in the example of FIG. 3) or plural blocks to be played back simultaneously (a set of plural media objects contained between <par> and </par>), and to transfer in precedence only an object belonging to a block immediately after in time the block which the object during playback belongs to.

At first, a block including an object to be played back first is extracted from the timing tree 107 (step S801). In the case that the child element is searched from the element body corresponding to a route of the timing tree 107 according to depth priority search, when the multimedia object element is detected, the searched element corresponds to an object included in a block played back first. When the "par" element however is detected, the object corresponds to all multimedia object elements that the "par" element has. In a case based on the description of SMIL file "sample1.smil" shown in FIG. 3, the video object "video1.mpg" and image object "image1.jpg" become objects played back first.

Next, it is examined whether the stream type object is being played back (step S802). Before the playback starts and when no stream type object under playback exists, the process advances to step S814 to examine whether the download type object exists on the next block.

In this process, the video object "video1.mpg" is the stream type object based on the description of the URL, and the image object "image1.jpg" is the download type object based on the description of the URL. Therefore, the process advances from step S814 to step S815, and the image object "image1.jpg" of the download type object is downloaded.

In this download, HTTP is specified as the transfer protocol to the transceiver 101, and a transfer request of the image object "image1.jpg" is sent thereto. The transceiver 101 that received the instruction requests the server 201 described in the URL of the image object "image1.jpg" to transfer the image object "image1.jpg". The server 201 that received the transfer request transfers the image object "image1.jpg" to the client terminal 100 according to the transfer protocol HTTP.

The image object "image1.jpg" transferred to the client terminal 100 is received by the transceiver 101, and stored in the receiving buffer 102 under the control of the controller 109. When the transceiver 101 has received the complete image object "image1.jpg", the transfer from the server 201 to the client terminal 100 is completed. The process of acquiring the download type object from the server in step S815 is referred to as merely download hereinafter.

It is examined whether the stream type object that the buffering is not completed exists in the object to be played back first (step S816). In this process, the video object "video1.mpg" is a stream type object, and the buffering is not performed. Thus, the process advances to step S817. In this step, the video object "video1.mpg" corresponding to the stream type object to which the SETUP is not subjected is subjected to the SETUP. The SETUP represents to request the server described in the URL of the object by a client in RTSP to prepare a transfer. The server that received this request generates a session, and makes the state capable of starting the transfer of the object. A concrete method is described in Chapter 10 of RFC2326 of RTSP.

Next, it is determined whether there is the stream type object that the buffering is not started or reopen (step S818). Since the video object "video1.mpg" exists as a stream type object, the process advances from step S818 to step S819. It is examined whether the bandwidth of the network 300 includes an empty in step S819.

The available bandwidth of the network 300 is obtained as a value obtained by subtracting a bandwidth b used for transfer of data from a bandwidth B of the whole network 300 to be provided from hardware for example. The bandwidth b used for data transfer of the network 300 is calculated from a quantity of data to reach in a fixed time for example. Since no object transferred in a stream type exists, the available bandwidth is B.

The bandwidth B of the whole network 300 and the available bandwidth B-b calculated based on the bandwidth B are measured by the transceiver 101 in the present embodiment. This measurement result is sent to the transfer scheduling device 106. As thus described, the transceiver 101 need not have a function for measuring the available bandwidth. The measurement of the available bandwidth may be performed at other locations.

As thus described when an available bandwidth exists in the network 300, that is, B-b >0, the buffering of the object having a minimum value of the "begin" attribute among the stream type objects which does not start or reopen the buffering is started (step S820). In this process, the stream type object is only the video object "video1.mpg", and the value of the "begin" attribute is 5s by its description. Therefore, an instruction for requesting transfer of the video object "video1.mpg" is sent to the transceiver 101. The transceiver 101 requests the server 202 described in URL of the video object "video1.mpg" to transfer the video object "video1.mpg" in response to this instruction. Transmitting a PLAY request described in Chapter 10 of RFC2326 of RTSP, for example, performs this transfer request.

The server 202 that received the PLAY request corresponding to the transfer request transfers the packets into which the video object "video1.mpg" is split by RTSP, to the client terminal 100. The client terminal 100 stores the packets received by the transceiver 101 in receiving buffer 102 by only a predetermined buffering size. When the received packets reach the buffering size, the start of the playback is temporarily stopped if the quantity of received data of another stream type object in the block does not reach the buffering size or the playback of the previous block has not ended. Therefore, the PAUSE signal mentioned in 10th chapter of RFC2326 of RTSP, for example, is transmitted, the transmission of the message of the packets is temporarily interrupted, and the reception ends. When the reception is temporarily interrupted before the received data reaches the buffering size, the PAUSE signal is transmitted and the reception of data is re-started, and the PLAY signal is transmitted. In this way it is merely referred to as buffering hereinafter to request to transfer data of the stream type object and receive data of the buffering size to be necessary for starting playback.

When the buffering of the video object "video1.mpg" starts, the process returns to step S818. However, the object that does not start or reopen the buffering does not exist. Thus, the process advances to step S821. When it is confirmed that the buffering of the video object "video1.mpg" has ended, the process advances to step 822 to confirm that the playback of the first block has not yet been executed.
Then the playback of the first block starts (step S823).

A block including the object to be played back next is acquired from the timing tree 107 (step S823). In the case that the timing tree 107 is traced by depth priority search from the next child element of the parent element of the block which is currently being played back, when the multimedia object element is detected, the detected element is the object contained in the block to be played back next. When the "par" element is detected, all multimedia object elements contained in the "par" element are the objects contained in the block to be played back next.

In this process, the objects included in the block to be played back next are the video object "video2.mpg", audio system object "audio1.mp3" and text object "text1.txt". Therefore, the process returns to step S802 from step S823. Since the video system object "video1.mpg" corresponding to the stream type object is played back in this time, the process advances to step S803.

The video object "video2.mpg" and audio object "audio1.mp3" among the objects to be played back next indicate the stream type by means of the description of URL, and the text object "text1.txt" indicates the download type object by means of the description of URL. As thus described, since there are the video system object "video2.mpg" and audio object "audio1.mp3" corresponding to the stream type object as the object to be played back next, the process advances from step S803 to step S804. The values of the "begin" attributes of the video system object "video1.mpg" and audio object "audiol.mp3" are examined, and the request for SETUP is performed in the order that the value is small (step S804). In this embodiment, since the "begin" attribute of the video system object "video2.mpg" is not specified, it is 0s, and the audio object "audio1.mp3" is 5s by the specification of the "begin" attribute. Therefore, first the SETUP of the video system object "video2.mpg" is requested in step S804, and then the SETUP of the audio object "audio1.mp3" is requested.

Subsequently, it is examined whether the bandwidth of the network 300 includes an empty (step S805). The process advances to step S806 at a time point when the network includes the available bandwidth. The cases that the bandwidth of network 300 has an empty include a case that the playback of all the stream type object is completed and a case that it is not so. When all the stream type objects have been played back, the process advances to step S814. The processes followed by step S814 are as described above. There will now be described a case in which the playback of all the stream type objects is not completed.

In this case, the process advances to step S807 to determine whether the playback finish time F of the object is settled. The time value that is explicit in the "dur" attribute or end attribute to determine the timing of playback end is specified to both of the video system object video1.mpg and image object image1.jpg that are under the playback in this time. Therefore, the playback finish time F is settled to 25 seconds from the start of the playback as shown in FIG. 4B.

When the playback finish time F is settled, the process advances to step S808. In this step, times T(D1) to T(Dn) necessary for transferring the amount of data Dl to Dn which are necessary for starting the playback of the stream type object of the next block in the available bandwidth of the network 300 are obtained. In this case, at first the information of the amount of data Dv and Da that is necessary for starting playback of the video system object "video1.mpg" and image object "image1.jpg" is acquired. These amounts of data Dv and Da correspond to the buffer sizes necessary for starting the playback of the video system object "video1.mpg" and audio object "audio1.mp3". Therefore, the time necessary for transferring data corresponding to Dv and Da is represented by T(Dv) = Dv/b, and T(Da) = Da/b (where the available bandwidth is b).

In the time F- f°(T(D)), the buffering of the stream type object starts sequentially from the object that the value of the "begin" attribute is small (step S809). In this case, F - *f*^{o} (T(D)) = F - (T(Dv) + T(Da))), and the buffering of the video system object "video2.mpg" that the value of the "begin" attribute is smaller starts. When this buffering ends, the buffering of the audio object "audio1.mp3" starts. In this case, the server 202 transfers the object at a transfer rate not more than the available bandwidth b of the network 300, and the scheduling device 106 adds information of the available bandwidth b, for example, to the transfer request, and transmits it to the server 202 via the transceiver 101. In addition, if the condition F - f^{o}(T(D)) <0, exists, the buffering of the stream type object starts promptly.

Differing from the embodiment of FIG. 3, the buffering of the stream type object starts in sequence from the object that the value of the "begin" attribute is small, immediately when the playback finish time of the object under playback is not settled in step S807 (step S810). In this case, the buffering of the video object "video2.mpg" whose value of the "begin" attribute is small starts. When this buffering ends, the buffering of the audio object "audio1.mp3" starts.

When the playback of the video object "video1.mpg" corresponding to the stream type object under playback ends after 15 seconds from the start of the playback as shown in FIG. 4B (step S811), it is decided that there is the stream type object that does not complete the buffering (step S812). When buffering of the video object "video1.mpg" and audio object "audio1.mp3" corresponding to the stream type object ends, buffering stops (step S813).

Next, it is examined whether a download type object exists (step S814). If a download type object exists, the object is downloaded (step S815). In this case, a text object "text1.txt" exists as the download type object, and the text object "text1.txt" is downloaded.

When no download object exists in step S814 or a download type object exists and download has finished in step S815, it is decided whether there is a stream type object that does not complete the buffering (step S816). If a stream type object exists, the process advances to step S817. The value of the "begin" attribute of the stream type object that does not perform SETUP is examined to request SETUP in accordance with a sequence of small value. In this case, if the buffering of either of the video object "video2.mpg" and audio object "audio1.mp3" that are stream type objects is not completed, the process advances to step S817. However, SETUP is completed in both the video object "video1.mpg" and audio object "audio1.mp3" in the process. Therefore, the process advances to step S818 without performing anything in step S817.

When buffering of either the video object "video2.mpg" or audio object "audio1.mpg" is not completed, it is confirmed whether the bandwidth of the network 300 has an empty (step S819). If the network 300 has the available bandwidth, the buffering of the object having a small value of the "begin" attribute among the stream type objects (in this case, the video object "video1.mpg") starts (step S820). When the stream type object that does not start the buffering exists and it can be confirmed that the network has the available bandwidth, the buffering of the stream type object starts.

When the buffering of both the video object "video1.mpg" and audio object "audio1.mp3", which are stream type objects is finished (step S821), it is confirmed whether the playback of all the objects in the block that are currently being played back has ended (step S822). If playback has finished, playback of the next block is started (step S823). The object to be played back next is checked (step S824). If the object to be played back next is not in this process, the transfer scheduling device 106 ends the process.

The multimedia object data acquired by the transfer scheduling device 106 and transceiver 101 as described above are stored in the receiving buffer 102, and send them to the playback device 110. The controller 109 instructs the playback device 110 to play back the object at an appropriate time and position based on the timing tree 104 and region table 108. The playback device 110 selects decoders 111a to 111d according to the data type of the object in response to the instruction, and sends an output of the selected decoder to the display 112 and speaker 113. When the playback device 110 starts or ends the playback, it notifies the controller 109 of the start or end of playback. The controller 109 receives this notification, and instructs the interpretive device 105 to update the timing tree 107. These processes are performed until the transfer scheduling device 106 ends the process and the playback device 110 ends the playback and display.

According to the present embodiment, the terminal requests transfer of the data necessary to start playback of the multimedia object to be played back next, using the available bandwidth of the network 300, from the servers 201 and 202, while the client terminal 100 plays back the multimedia scene. As a result, the time necessary until start of the next playback can be shortened.

In the embodiment, the multimedia object to be played back next is acquired while the client terminal 100 id playing back the multimedia scene. Therefore, it is not necessary to acquire all the multimedia objects in the scene before starting playback of the multimedia object. For this reason, the delay until the start of playback, and the buffering region of the client terminal 100 can be reduced.

Furthermore, in the present embodiment, the client terminal 100 always acquires all the multimedia objects of the download type and data of the buffer size necessary for starting playback of the multimedia object of the stream type before playback of those objects. Because of this, it is possible to further prevent discontinuous playback at the client terminal 100.

### (The second embodiment)

The second embodiment of the present invention will be described below. The second embodiment is common to the first embodiment in the structures from FIGS. 1 to 7. However, the functions in which the available bandwidth of the network 300 and the whole bandwidth of the network 300 in the transceiver 101 of FIG. 1 are ascertained, and the function of flow control to perform data transfer in the range of the bandwidth specified by the client in the server 202 of FIG. 2 are not always necessary.

In the present embodiment, when transfer of the multimedia scene is requested by a user typing "http://foo.com/sample1.smil" (the URL of the SMIL file "sample1.smil" showed in FIG. 3), for example, or clicks on a link for the URL in a home page displayed on the display 112, the processes from the reception of the SMIL file "sample1.smil" to the formation of the timing tree 107 shown in FIG. 7 are performed similarly to the first embodiment. In the present embodiment, the processing performed by the transfer scheduling device 106 of FIG. 1 differs from that of the first embodiment.

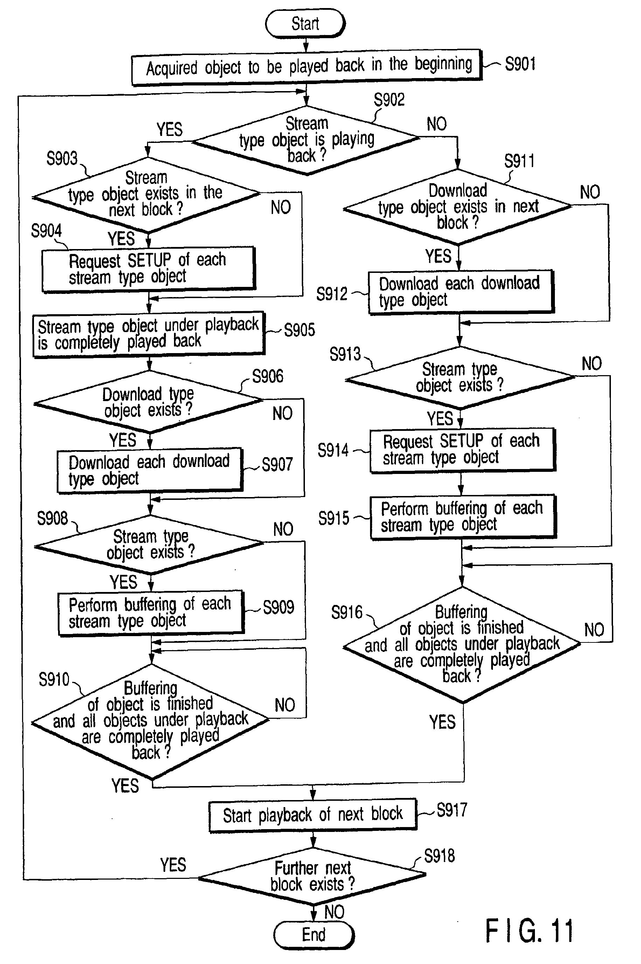

The processing of the transfer scheduling device 106 in the present embodiment is explained in connection with the flowchart shown in FIG. 11. One feature of the transfer scheduling device 106 of a the present embodiment is to split plural objects described by the SMIL file into single blocks (a single media object element having no <par> element in the parent element in the embodiment of FIG. 3) or blocks (a set of a plurality of media objects contained between <par> and </par> elements in the embodiment of FIG. 3) to be played back simultaneously, and to request the server to transfer only an object belonging to a block immediately after the block belonging to an object during playback.

At the start, the first object to be played back is acquired by the timing tree 107 (step S901). In the examples shown in FIGS. 7 and 8, the objects to be played back by an operation similar to the first embodiment are the video object "video1.mpg" and image object "image1.jpg".

Next, it is examined whether the stream type object is being played back (step S902). In this case, since the playback is not yet executed and no object during playback exists, the process advances to step S911, where it is examined whether the download type object exists in the block to be played back next. If the download type object exists, it is downloaded (step S912). The video object "video1.mpg" is a stream type object by the description of the URL, and the image object "image1.jpg" is a download type object by the description of the URL. In other words, the image object "image1.jpg" which is a download type object is downloaded. The method of downloading is similar to that of the first embodiment, and the scheduling device 106 instructs the transceiver 101 to request transfer of the image object "image1.jpg". The transceiver 101 requests the server 201 described by URL of the image object "image1.jpg" to download the image object "image1.jpg".

When download of the download type image object "image1.jpg" has been completed in this way, the process advances to step S913 to examine whether there is a next stream type object. In this case, the process advances to step S914 since a stream type video object "video1.mpg" exists. In this step, the value of the "begin" attribute of the video object "video1.mpg" is examined, and the SETUP of transfer of the video object "video1.mpg" is requested. The method of SETUP is similar to the first embodiment. Furthermore, the transfer scheduling device 106 instructs the transceiver 101 to request transfer of the video object "video1.mpg", to perform buffering (step S915). The method of buffering is similar to that of the first embodiment.

The process advances to step S916 when buffering of the video object "video1.mpg" is completed in step S915 and when no stream type object exists in step S913. If it is determined in step S916 that buffering of the video object "video1.mpg" is completed and playback of all the objects has ended, playback of the next block starts (S917).

The process advances to step S918 to examine whether there is a block to be played back next. In this case, it is found by an operation similar to the first embodiment that the video object "video2.mpg", audio object "audio1.mp3" and text object "text1.txt" exist as the block to be played back next. When a block to be played back next exists in step S918, the process returns to step S902 to re-examine whether stream type object is being played back.

In this case, since a stream type object "video1.mpg" is being played back, the process advances to step S903 to examine whether a stream type object exists in the block to be played back next. The video object "video2.mpg" and audio object "audiol.mp3" among the objects to be played back next are a stream type object by the description of the URL, and the text object "text1.txt" is a download type object by the description of the URL. In other words, since the video object "video2.mpg" and audio object "audio1.mp3", which are stream type objects, exist, the process advances to step S904 to perform a request for SETUP of a stream type object.

The value of the "begin" attribute is examined in step S904. In this example, the "begin" attribute of the video object "video2.mpg" is 0s because of no specification, and that of the audio object "audio1.mp3" becomes 5s because of the specification of "begin" attribute. Therefore, at first the SETUP of the video object "video2.mpg" is requested, and then the SETUP of the audio object "audio1.mp3" is requested.

When playback of the video object "video1.mpg" corresponding to the stream type object ends after 15 seconds from the start of the playback as shown in FIG. 4B (S905), it is examined whether a download type object exists in the block to be played back next (step S906). If a download type object exists, it is downloaded (step S907). In this case, since a download type text object "text1.txt" exists in the object of the block to be played back next, the text object "text1.txt" is downloaded.

It is examined whether there is a stream type object (step S908). If there is a stream type object, this is subjected to buffering (step S909). In this case, since the video object "video2.mpg" and audio object "audio1.mp3" exist, a transfer request is performed from the video object "video2.mpg" whose value of the "begin" attribute is small, and buffering starts. When the buffering of the video object "video2.mpg" is completed, the transfer of the audio object "audio1.mp3" is requested, and then buffering is performed.

When the existence of a stream type object is determined in step S908 and buffering of the stream type video object "video1.mpg" and audio object "audio1.mp3" has been completed in step S909, or when it is determined in step S908 that no stream type object exists, the process advances to step S910. When it is determined in step S910 that buffering has been completed and that playback of all the objects (image object "image1.jpg" in this case) has ended, the playback of the next block starts (S917). It is examined in step S918 whether the next block exists. Since no next block exists in this process, the transfer scheduling device 106 ends the process.

The process of playback and display of the multimedia object data obtained by the transfer scheduling device 106 and transceiver 101 as above is similar to that of the first embodiment.

According to the present embodiment, when only a download type object is played back in playback of the multimedia scene, the data necessary for starting playback of the multimedia object to be played back next can be acquired precedence using the network 300 that is not used for transfer of the multimedia object. As a result, the time taken until the start of the next playback can be reduced.

In the present embodiment, data of the multimedia object required next in playback of a scene is acquired each time. Therefore, it is not necessary to acquire data of all multimedia objects in a scene before starting playback of the multimedia scene. For this reason, the delay until starting playback is shortened, and the buffer region of the client terminal 100 can be reduced.

In the present embodiment, all the download type object data and data of the buffer size necessary for starting playback of the stream type object are always acquired before playback of those objects. Therefore, discontinuous playback of multimedia data is further prevented at the client terminal 100.

In the second embodiment, when plural stream type objects are included in the same block, the SETUP request is performed in accordance with a sequence of small values of the "begin" attribute. However, SETUP may be requested for the next object without waiting for completion of the SETUP request of the object in SETUP request.

In the above embodiment, buffering of the stream type object is performed in a sequence of a small value of the "begin" attribute. However, buffering of the next object may be started without waiting for completion of buffering of the object now being buffered.

In the first and the second embodiment, the client terminal 100, that is, content playback apparatus, receives the SMIL file that is scene descriptive information from the server 201 that is a content distribution device through the network 300. However, the file may be inputted from another location.

According to the present invention as discussed above, the content data following on the content data during playback is acquired in precedence, so that playback can be performed with the time specified by the scene descriptive information being held. Besides, the delay until playback is started or next playback is started can be shortened, and the buffer region can be reduced, too.

## Claims

1. A content playback method of playing back content data transferred over a network from at least one content distribution device, the method **characterized by** comprising:
receiving scene descriptive information indicating display regions for displaying multimedia objects included in the contents data respectively, and display timing data for displaying the multimedia objects of the contents data at given times, the display timing data including at least a start time for starting the display of each multimedia object and a time interval during which the multimedia object is to be displayed;
scheduling transfer of the contents data based on the display region data and the display timing data of the scene descriptive information: and
requesting the content distribution device to transfer the content data based on a scheduling result.

2. A content playback method according to claim 1, **characterized by** including:
measuring an available bandwidth of the network; and
requesting the content distribution device to transfer the subsequent multimedia object of the content data based on the scene descriptive information when the available bandwidth exists.

3. A content playback method according to claim 1, **characterized by** including:
transferring the scene descriptive data from the content distribution device to a client terminal according to request of auser;
dividing the multimedia objects to be played back together into a singular block or a plurality of blocks;
downloading download type multimedia objects included in the block from the content distribution device to the client terminal;
taking in stream type multimedia objects included in the file from the content distribution device to the client terminal;
playing back a block including the stream type multimedia objects and download type multimedia objects.
examining whether a block to be played back next exists,
requesting the content distribution device to transfer a stream type object existing in the block to be played back next;
examining whether the network has an available bandwidth; and
buffering the stream type object to be played back next according to the available bandwidth.

4. A content playback apparatus which plays back content data transferred over network from at least one content distribution device (201, 202), the apparatus **characterized by** comprising:
a receiving means for receiving scene descriptive information indicating plural display regions for displaying multimedia objects included in the contents data, respectively, and display timing data for displaying the multimedia objects of the contents data at given times, the display timing data including at least a start time for starting the display of each multimedia object and a time interval duping which the multimedia object is to be displayed;scheduling means for scheduling transfer of the contents data based on the display region data and the display timing data of the scene descriptive information; and
requesting means for requesting the content distribution device to transfer the content data based on a scheduling result.

5. A content playback apparatus according to claim 4, wherein the requesting means (101) includes means for dividing the multimedia objects to be played back together into a singular block or a plurality of blocks to be played back simultaneously, and means for requesting the content distribution device to transfer only content data belonging to a block immediately after in time a block belonging to content data under playback.

6. A content playback apparatus according to claim 5, wherein the requesting means (101) includes means for requesting the content distribution device to transfer only the multimedia object belonging to a block immediately after in time a block belonging to content data under playback when only download type multimedia object is played back.

7. A content playback apparatus according to claim 5, **characterized in that** the content playback apparatus includes a playback device (110) which receives and plays back the multimedia objects of the content data according to the scene descriptive information; and a measuring device (101) which measures an available bandwidth of the network: and the requesting means (101) includes means for requesting the content distribution device to transfer a subsequent multimedia object of the content data based on the scene descriptive information when the available bandwidth exists.

8. A content playback apparatus according to claim 7, **characterized in that** the requesting means (101) includes means for dividing a singular multimedia object or a plurality of multimedia objects corresponding to the scene descriptive information into a singular block or a plurality of blocks, and means for requesting the content distribution device for transferring only content data belonging to a block immediately after in time a block belonging to content data under playback.

9. A content playback apparatus according to claim 7 or 8, **characterized in that** the requesting means (101) includes means for requesting the content distribution device to transfer the subsequent multimedia object of the content data with a transfer rate not more than the available bandwidth.

10. A content playback apparatus according to claim 7 or 8, **characterized in that** the requesting means (101) includes means for requesting the content distribution device to transfer only the piece of the content data which is stream type data.

11. A content playback apparatus according to claim 10, **characterized in that** the requesting means (101) includes means for requesting the content distribution device to transfer the subsequent multimedia object of the content data corresponding to a given amount capable of starting the playback.

12. A content playback apparatus according to claim 10, **characterized in that** the requesting means (101)includes means for determining a playback finish time of a multimedia object of the content data under playback based on the scene descriptive information, and means for requesting the content distribution device to complete transferring a subsequent multimedia object of the content data of an amount capable of starting the playback by an playback finish time.

## Patentansprüche

1. Inhaltswiedergabeverfahren zum Wiedergeben von, von zumindest einer Inhaltsverteilungsvorrichtung über ein Netzwerk übertragenen Inhaltsdaten, wobei das Verfahren **dadurch gekennzeichnet ist**, das es umfasst:
Empfangen von Szenenbeschreibungsinformationen, die Anzeigenbereiche zum Anzeigen von jeweils in den Inhaltsdaten enthaltenen Multimediaobjekten und Anzeigezeitdaten zum Anzeigen der Multimedia-Objekte der Inhaltsdaten zu gegebenen Zeiten angeben, wobei die Anzeigezeitdaten zumindest eine Startzeit zum Starten der Anzeige jedes Multimediaobjekts und ein Zeitinterval, während dem das Multimediaobjekt angezeigt werden soll, beinhaltet;
Zeitliches Planen der Übertragung der Inhaltsdaten basierend auf den Anzeigenbereichsdaten und den Anzeigezeitdaten der Szenenbeschreibungsinformationen; und
Auffordern der Inhaltsverteilungsvorrichtung, die Inhaltsdaten basierend auf einem Zeitplanergebnis zu übertragen.

2. Inhaltswiedergabeverfahren nach Anspruch 1, **dadurch gekennzeichnet, dass** es beinhaltet:
Messen einer verfügbaren Bandbreite des Netzwerks; und
Auffordern der Inhaltsverteilungsvorrichtung, das nachfolgende Multimediaobjekt der Inhaltsdaten zu übertragen, basierend auf der Szenenbeschreibungsinformation, wenn die verfügbare Bandbreite besteht.

3. Inhaltswiedergabeverfahren nach Anspruch 1, **dadurch gekennzeichnet, dass** es beinhaltet:
Übertragen der Szenenbeschreibungsdaten von der Inhaltsverteilungsvorrichtung zu einem Client-Terminal gemäß Aufforderung durch einen Benutzer;
Teilen der zusammen wiederzugebenden Multimediaobjekte in einen einzelnen Block oder eine Mehrzahl von Blöcken;
Herunterladen von Objekten vom Multimediatyp, die im Block enthalten sind, von der Inhaltsverteilungsvorrichtung auf das Client-Terminal;
Hereinnehmen von in der Datei von der Inhaltsverteilungsvorrichtung zum Client-Terminal enthaltenen Multimediaobjekten vom "Stream"-Typ;
Wiedergeben eines Blocks, der die Multimediaobjekte vom Stream-Typ und Multimediaobjekte vom Herunterladetyp enthält;
Prüfen, ob ein als nächstes abzuspielender Block existiert;
Auffordern der Inhaltsverteilungsvorrichtung, ein Objekt vom Stream-Typ zu übertragen, das im als nächstes wiederzugebenden Block existiert;
Prüfen, ob das Netzwerk eine verfügbare Bandbreite aufweist; und
Puffern des als nächstes wiederzugebenden Objekts vom Stream-Typ anhand der verfügbaren Bandbreite.

4. Inhaltswiedergabevorrichtung, die von zumindest einer Inhaltsverteilungsvorrichtung (201, 202) über ein Netzwerk übertragene Inhaltsdaten wiedergibt, wobei die Vorrichtung **dadurch gekennzeichnet ist**, das sie umfasst:
ein Empfangsmittel zum Empfangen von Szenenbeschreibungsinformationen, die Anzeigenbereiche zum Anzeigen von jeweils in den Inhaltsdaten enthaltenen Multimediaobjekten und Anzeigezeitdaten zum Anzeigen der Multimedia-Objekte der Inhaltsdaten zu gegebenen Zeiten angeben, wobei die Anzeigezeitdaten zumindest eine Startzeit zum Starten der Anzeige jedes Multimediaobjekts und ein Zeitinterval, während dem das Multimediaobjekt angezeigt werden soll, beinhaltet;
Zeitplanungsmittel zum zeitlichen Planen der Übertragung der Inhaltsdaten basierend auf den Anzeigenbereichsdaten und den Anzeigezeitdaten der Szenenbeschreibungsinformationen; und
Aufforderungsmittel zum Auffordern der Inhaltsverteilungsvorrichtung, die Inhaltsdaten basierend auf einem Zeitplanergebnis zu übertragen.

5. Inhaltswiedergabevorrichtung gemäß Anspruch 4, wobei das Aufforderungsmittel (101) Mittel zum Teilen der zusammen wiederzugebenden Multimediaobjekte in einen einzelnen Block oder eine Mehrzahl von Blöcken, die simultan wiederzugeben sind, und Mittel zum Auffordern der Inhaltsverteilungsvorrichtung, nur Inhaltsdaten zu übertragen, die zu einem Block zeitlich unmittelbar nach einem Block gehören, der zu in Wiedergabe befindlichen Inhaltsdaten gehört, enthält.

6. Inhaltswiedergabevorrichtung gemäß Anspruch 5, wobei das Aufforderungsmittel (101) Mittel zum Auffordern der Inhaltsverteilungsvorrichtung, nur das Multimediaobjekt zu übertragen, das zu einem Block zeitlich unmittelbar nach einem Block gehört, der zu in Wiedergabe befindlichen Inhaltsdaten gehört, wenn nur ein Multimediaobjekt vom Herunterladetyp wiedergegeben wird, enthält.

7. Inhaltswiedergabevorrichtung gemäß Anspruch 5, **dadurch gekennzeichnet, dass** die Inhaltswiedergabevorrichtung eine Wiedergabevorrichtung (110), die die Multimediaobjekte der Inhaltsdaten anhand der Szenenbeschreibungsinformationen empfängt und wiedergibt; und eine Messvorrichtung (101), die eine verfügbare Bandbreite des Netzwerks misst, enthält, und das Aufforderungsmittel (101) Mittel zum Auffordern der Inhaltsverteilungsvorrichtung, ein nachfolgendes Multimediaobjekt der Inhaltsdaten basierend auf den Szenenbeschreibungsinformationen zu übertragen, wenn die verfügbare Bandbreite besteht, enthält.

8. Inhaltswiedergabevorrichtung gemäß Anspruch 7, **dadurch gekennzeichnet, dass** das Aufforderungsmittel (101) Mittel zum Unterteilen eines einzelnen Multimediaobjekts oder einer Mehrzahl von Multimediaobjekten anhand der Szenenbeschreibungsinformationen in einen einzelnen Block oder eine Mehrzahl von Blöcken, und Mittel zum Auffordern der Inhaltsverteilungsvorrichtung, nur Inhaltsdaten zu übertragen, die zu einem Block zeitlich unmittelbar nach einem zu den in Wiedergabe befindlichen Inhaltsdaten gehörenden Block gehören, enthält.

9. Inhaltswiedergabevorrichtung gemäß Anspruch 7 oder 8, **dadurch gekennzeichnet, dass** das Aufforderungsmittel (101) Mittel zum Auffordern der Inhaltsverteilungsvorrichtung, das nachfolgende Multimediaobjekt der Inhaltsdaten mit einer Übertragungsrate nicht größer als der verfügbaren Bandbreite zu übertragen, enthält.

10. Inhaltswiedergabevorrichtung gemäß Anspruch 7 oder 8, **dadurch gekennzeichnet, dass** das Aufforderungsmittel (101) Mittel zum Auffordern der Inhaltsverteilungsvorrichtung, nur den Teil der Inhaltsdaten zu übertragen, die Daten vom Stream-Typ sind, enthält.

11. Inhaltswiedergabevorrichtung gemäß Anspruch 10, **dadurch gekennzeichnet, dass** das Aufforderungsmittel (101) Mittel zum Auffordern der Inhaltsverteilungsvorrichtung, das nachfolgende Multimediaobjekt der Inhaltsdaten entsprechend einer gegebenen Menge, die zum Starten der Wiedergabe fähig ist, zu übertragen, enthält.

12. Inhaltswiedergabevorrichtung gemäß Anspruch 10, **dadurch gekennzeichnet, dass** das Aufforderungsmittel (101) Mittel zum Bestimmen einer Wiedergabeendzeit eines Multimediaobjekts der in Wiedergabe befindlichen Inhaltsdaten basierend auf der Szenenbeschreibungsinformation, und Mittel zum Auffordern der Inhaltsverteilungsvorrichtung, die Übertragung eines nachfolgenden Multimediaobjekts der Inhaltsdaten in einer Menge, die zum Starten der Wiedergabe fähig ist, bis zu einer Wiedergabeendzeit abzuschließen, enthält.

## Revendications

1. Procédé de reproduction de contenu pour reproduire de données de contenu transférées sur un réseau à partir d'au moins un dispositif de distribution de contenu, le procédé étant **caractérisé en ce qu'**il comprend les étapes de :
réception d'informations descriptives de scène indiquant des régions d'affichage pour afficher des objets multimédia compris dans les données de contenu, respectivement, et des données de synchronisation d'affichage pour afficher les objets multimédia de données de contenu à des temps donnés, les données de synchronisation d'affichage comprenant au moins un temps de début pour démarrer l'affichage de chaque objet multimédia et un intervalle de temps pendant lequel l'objet multimédia est à afficher ;
programmation de transfert de données de contenu sur la base des données de région d'affichage et des données de synchronisation d'affichage des informations descriptives de scène ; et
demande au dispositif de distribution de contenu de transférer les données de contenu sur la base du résultat de programmation.

2. Procédé de reproduction de contenu selon la revendication 1, **caractérisé en ce qu'**il comprend les étapes de :
mesure d'une bande passante disponible du réseau ; et
demande au dispositif de distribution de contenu de transférer l'objet multimédia qui suit des données de contenu sur la base des informations descriptives de scène lorsque la bande passante disponible existe.

3. Procédé de reproduction de contenu selon la revendication 1, **caractérisé en ce qu'**il comprend les étapes de :
transfert des données descriptives de scène à partir du dispositif de distribution de contenu à un terminal client selon la demande d'un utilisateur ;
division des objets multimédia à reproduire en même temps dans un bloc unique ou une pluralité de blocs ;
téléchargement d'objets multimédia du type téléchargement compris dans le bloc à partir du dispositif de distribution de contenu au terminal client ;
faire entrer des objets multimédia de type flux compris dans le fichier à partir du dispositif de distribution de contenu jusqu'au terminal client ;
reproduction d'un bloc comprenant les objets multimédia de type flux et les objets multimédia de type téléchargement,
examen si un bloc à reproduire ensuite existe,
demande au dispositif de distribution de contenu de transférer un objet de type flux existant dans le bloc à reproduire ensuite ;
examen si le réseau a une bande passante disponible ; et
mise en tampon de l'objet de type flux à reproduire ensuite selon la bande passante disponible.

4. Appareil de reproduction de contenu qui relit des données de contenu transférées sur le réseau à partir d'au moins un dispositif de distribution de contenu (201, 202), l'appareil étant **caractérisé en ce qu'**il comprend :
un moyen de réception pour recevoir des informations descriptives de scène indiquant plusieurs régions d'affichage pour afficher des objets multimédia compris dans les données de contenu, respectivement, et des données de synchronisation d'affichage pour afficher les objets multimédia des données de contenu à des instants donnés, les données de synchronisation d'affichage comprenant au moins un temps de début pour démarrer l'affichage de chaque objet multimédia et un intervalle de temps pendant lequel l'objet multimédia est à afficher ; un moyen de programmation pour programmer le transfert des données de contenu sur la base des données de région d'affichage et des données de synchronisation d'affichage des informations descriptives de scène ; et
un moyen de demande pour demander au dispositif de distribution de contenu de transférer les données de contenu sur la base du résultat de programmation.

5. Appareil de reproduction de contenu selon la revendication 4, dans lequel le moyen de demande (101) comprend un moyen pour diviser les objets multimédia à reproduire en même temps dans un bloc unique ou une pluralité de blocs à reproduire simultanément, et un moyen pour demander au dispositif de distribution de contenu de ne transférer que les données de contenu appartenant à un bloc immédiatement après en temps, un bloc appartenant aux données de contenu en cours de reproduction.

6. Appareil de reproduction de contenu selon la revendication 5, dans lequel le moyen de demande (101) comprend un moyen pour demander au dispositif de distribution de contenu de ne transférer que l'objet multimédia appartenant à un bloc immédiatement après en temps, un bloc appartenant à des données de contenu en cours de lecture lorsque seul l'objet multimédia de type téléchargement est reproduit.

7. Appareil de reproduction de contenu selon la revendication 5, **caractérisé en ce que** l'appareil de reproduction de contenu comprend un dispositif de reproduction (110) qui reçoit et relit les objets multimédia des données de contenu selon les informations descriptives de scène ; et un dispositif de mesure (101) qui mesure une bande passante disponible du réseau ; et le moyen de demande (101) comprend un moyen pour demander au dispositif de distribution de contenu de transférer un objet multimédia qui suit des données de contenu sur la base des informations descriptives de scène lorsque la bande passante disponible existe.

8. Appareil de reproduction de contenu selon la revendication 7, **caractérisé en ce que** le moyen de demande (101) comprend un moyen pour diviser un objet multimédia unique ou une pluralité d'objets multimédia correspondant aux informations descriptives de scène en un bloc unique ou une pluralité de blocs, et un moyen pour demander au dispositif de distribution de contenu de ne transférer que les données de contenu appartenant à un bloc immédiatement après en temps un bloc appartenant aux données de contenu en cours de reproduction.

9. Appareil de reproduction de contenu selon la revendication 7 ou 8, **caractérisé en ce que** le moyen de demande (101) comprend un moyen pour demander au dispositif de distribution de contenu de transférer l'objet multimédia qui suit des données de contenu avec un débit de transfert pas plus grand que la bande passante disponible.

10. Appareil de reproduction de contenu selon la revendication 7 ou 8, **caractérisé en ce que** le moyen de demande (101) comprend un moyen pour demander au dispositif de distribution de contenu de ne transférer que l'élément des données de contenu qui sont des données de type flux.

11. Appareil de reproduction de contenu selon la revendication 10, **caractérisé en ce que** le moyen de demande (101) comprend un moyen pour demander au dispositif de distribution de contenu de transférer l'objet multimédia qui suit des données de contenu correspondant à une quantité donnée capable de commencer la reproduction.

12. Appareil de reproduction de contenu selon la revendication 10, **caractérisé en ce que** le moyen de demande (101) comprend un moyen pour déterminer un temps de fin de lecture d'un objet multimédia des données de contenu en cours de reproduction sur la base des informations descriptives de scène, et un moyen pour demander au dispositif de distribution de contenu de terminer le transfert d'un objet multimédia qui suit des données de contenu d'une quantité capable de démarrer la reproduction à un temps de fin de reproduction.
